# EUROPÄISCHE PATENTSCHRIFT

(11) **EP 3 626 041 B1**
(45) Veröffentlichungstag und Bekanntmachung des Hinweises auf die Patenterteilung: **29.11.2023**
(21) Anmeldenummer: 19184713.6
(22) Anmeldetag: 05.07.2019
(51) Int. Cl.: A01B 79/00, G06Q 50/02

(54) **LANDWIRTSCHAFTLICHES ARBEITSSYSSTEM**
AGRICULTURAL WORK SYSTEM
SYSTÈME DE TRAVAIL AGRICOLE

(30) Priorität: 24.09.2018 DE 102018123480
(43) Veröffentlichungstag der Anmeldung: 25.03.2020
(73) Patentinhaber: CLAAS Tractor SAS, 78141 Vélizy-Villacoublay Cedex (FR)
(72) Erfinder: Ehlert, Christian, 33719 Bielefeld (DE); Wieckhorst, Jan Carsten, 33104 Paderborn (DE); Steckel, Thilo, 33330 Gütersloh (DE); Mähler, Reinhold, 49214 Bad Rothenfelde (DE); Warkentin, Heinrich, 33330 Gütersloh (DE); Wilken, Andreas, 49143 Bissendorf (DE); Neitemeier, Dennis, 59510 Lippetal (DE)
(74) Vertreter: CLAAS Gruppe

(56) Entgegenhaltungen:
- EP-A1- 3 000 307
- EP-A1- 3 363 273
- EP-A2- 2 169 504
- DE-A1-102019 206 817
- US-A1- 2018 177 136

## Beschreibung

Die Erfindung betrifft ein landwirtschaftliches Arbeitssystem nach dem Oberbegriff des Anspruchs 1 sowie ein Verfahren zur Optimierung von Betriebsparametern unter Verwendung eines landwirtschaftlichen Arbeitssystems nach dem Oberbegriff des Anspruchs 15.

Ein solches landwirtschaftliches Arbeitssystem weist mindestens eine landwirtschaftliche Arbeitsmaschine, beispielsweise auch eine Flotte von landwirtschaftlichen Arbeitsmaschinen, auf, die jeweils mit mindestens einem Arbeitsaggregat zur Durchführung oder Unterstützung landwirtschaftlicher Arbeit gekoppelt sind. Bei einer solchen landwirtschaftlichen Arbeitsmaschine kann es sich um jedwede landwirtschaftliche Arbeitsmaschine handeln, die der Abarbeitung eines landwirtschaftlichen Arbeitsauftrags, beispielsweise einer Bodenbearbeitung wie Pflügen, Grubbern, Eggen oder dergleichen dient. Dazu gehören Zugmaschinen, insbesondere Traktoren, grundsätzlich aber auch Erntemaschinen, insbesondere Feldhäcksler, Mähdrescher oder dergleichen. Vorliegend steht beispielhaft die als Traktor ausgestaltete landwirtschaftliche Arbeitsmaschine im Vordergrund. Unter Arbeitsaggregaten werden neben eingebauten Arbeitsaggregaten wie Schrägförderer, Dreschwerk, Häckseleinrichtung oder dergleichen auch Anbaugeräte wie Pflug, Grubber, Egge oder dergleichen verstanden.

Bei landwirtschaftlichen Arbeitsmaschinen ist es zum Zwecke der Optimierung von Arbeitsprozessen, insbesondere bei einem Erntevorgang, bekannt, unterschiedliche Betriebsparameter zu erfassen und auszuwerten. Der Begriff "Betriebsparameter" ist vorliegend weit zu verstehen. Er umfasst alle für den Betrieb der landwirtschaftlichen Arbeitsmaschine und insbesondere für einen Arbeitsauftrag relevanten Parameter, insbesondere Maschinenparameter wie beispielsweise Drehzahl oder Fahrgeschwindigkeit, Arbeitsparameter wie beispielsweise verwendete Arbeitsaggregate oder den durchgeführten landwirtschaftlichen Arbeitsauftrag und/oder Umgebungsparameter wie beispielsweise die Bodenbeschaffenheit oder das Wetter. Wenn im Folgenden von einem Betriebsparameter die Rede ist, ist auch sein entsprechender Parameterwert gemeint. Die Erfassung entsprechender Betriebsparameter erfolgt zumindest teilweise automatisiert mittels eines Fahrerassistenzsystems der landwirtschaftlichen Arbeitsmaschine, insbesondere mittels Sensoren oder Eingabegeräten für Bedienereingaben.

Bei dem bekannten landwirtschaftlichen Arbeitssystem (DE 10 2008 061 252 A1), von dem die Erfindung ausgeht, wird durch das Fahrerassistenzsystem einer landwirtschaftlichen Arbeitsmaschine, beispielsweise eines Mähdreschers, eine Mehrzahl von Betriebsparametern erfasst und auf Basis vorgegebener Vorschriften (Kontextverarbeitungsregeln) zu einem Kontextprofil weiterverarbeitet. Ein solches Kontextprofil stellt eine Menge von Daten dar, die eine bestimmte Situation oder bestimmte Umfeld- oder Rahmenbedingungen kennzeichnen. Bei den Daten handelt es sich beispielsweise um solche zur Identität, zur geographischen Position und zum Betriebszustand der landwirtschaftlichen Arbeitsmaschine. Beispielsweise können die Daten aussagen, dass es sich bei der landwirtschaftlichen Arbeitsmaschine um einen Mähdrescher handelt, der sich zu einem bestimmten Zeitpunkt an einer bestimmten Position befindet und der mit einer bestimmten Geschwindigkeit fährt. In Abhängigkeit von einem solchermaßen ermittelten Kontextprofil können dann Maschinenparameter der landwirtschaftlichen Arbeitsmaschine im Hinblick auf einen bestimmten landwirtschaftlichen Arbeitsauftrag, der von der Arbeitsmaschine dann durchgeführt werden soll, optimiert werden. Die Durchführung einer solchen Optimierung erfolgt automatisch durch das Fahrerassistenzsystem, das heißt ohne Eingaben des Bedieners. Aufgrund der vielfältigen Anwendungen einer landwirtschaftlichen Arbeitsmaschine, insbesondere eines Traktors, in Zusammenhang mit einer Vielzahl an unterschiedlichen Anbaugeräten in Kombination mit weitestgehend unbekannten Umweltbedingungen kann mit dem bekannten landwirtschaftlichen Arbeitssystem aber nicht immer ein befriedigendes Optimierungsergebnis erzielt werden.

Der Erfindung liegt das Problem zu Grunde, das bekannte landwirtschaftliche Arbeitssystem derart auszugestalten und weiterzubilden, dass für ein möglichst breites Spektrum von Anwendungen eine verbesserte Optimierung von Maschinenparametern ermöglicht wird.

Das obige Problem wird bei einem landwirtschaftlichen Arbeitssystem gemäß dem Oberbegriff von Anspruch 1 durch die Merkmale des kennzeichnenden Teils von Anspruch 1 gelöst.

Das vorschlagsgemäße landwirtschaftliche Arbeitssystem weist als landwirtschaftliche Arbeitsmaschine insbesondere einen Traktor auf. Grundsätzlich ist die vorschlagsgemäße Lösung auch auf jedwede andere landwirtschaftliche Arbeitsmaschine, beispielsweise einen Mähdrescher oder Feldhäcksler, anwendbar. Die landwirtschaftliche Arbeitsmaschine weist ein Fahrerassistenzsystem auf, womit hier und vorzugsweise ein System gemeint ist, das den Bediener bei der Bedienung derselben während der Durchführung eines landwirtschaftlichen Arbeitsauftrags sowie beim Betrieb auf der Straße oder dem landwirtschaftlichen Betriebshof unterstützt. Die Unterstützung kann sich dabei auf das Fahren und/oder Lenken der landwirtschaftlichen Arbeitsmaschine beziehen, aber auch auf die Auswertung und/oder Ausgabe von Betriebsparametern bzw. entsprechender Parameterwerte und insbesondere auch auf die Steuerung und Regelung der landwirtschaftlichen Arbeitsmaschine oder einzelner Arbeitsaggregate, insbesondere eines Anbaugeräts, in Abhängigkeit von Betriebsparametern.

Wesentlich ist zunächst die grundsätzliche Überlegung, dass durch Einbeziehen des Bedieners in einen Optimierungsprozess bessere Optimierungsergebnis erzielt werden können, da es dem Bediener möglich ist, das Ergebnis einer durchlaufenen Optimierungsroutine schnell und einfach zu bewerten und insbesondere sofort zu entscheiden, ob eine Verbesserung gegenüber dem Zustand vor Durchlaufen der Optimierungsroutine eingetreten ist oder nicht. Vorschlagsgemäß wird also nach Durchlaufen einer Optimierungsroutine, bei der ein oder mehrere Betriebsparameter, insbesondere Maschinenparameter, bzw. die entsprechenden Parameterwerte geändert worden sind, systemseitig zwingend ein Bediener-Feedback in Form einer bedienerseitigen Klassifizierung des Optimierungsergebnisses eingefordert. Nach erfolgter Klassifizierung durch den Bediener wird der jeweilige im Rahmen der Durchführung der Optimierungsroutine erhaltene, geänderte Betriebsparameter oder -parametersatz in einem Datenpool hinterlegt. Ein solcher Betriebsparametersatz enthält insbesondere auch eine Menge von entsprechenden Parameterwerten bzw. Daten, die eine bestimmte Situation oder bestimmte Umfeld- oder Rahmenbedingungen kennzeichnen, beispielsweise Daten, bei denen es sich um solche zur Identität (Art und/oder Typ), zur geographischen Position und zum Betriebszustand der landwirtschaftlichen Arbeitsmaschine handelt.

Weiterhin ist wesentlich bei der vorschlagsgemäßen Lösung, dass die in dem Datenpool hinterlegten Betriebsparameter oder -parametersätze klassifizierungsbasiert einem Algorithmus zugeführt werden, der zur Erzeugung optimierter Betriebsparameter oder -parametersätze dient. "Klassifizierungsbasiert" bedeutet, dass der jeweilige Betriebsparameter oder -parametersatz bzw. die entsprechenden Parameterwerte dem Algorithmus abhängig vom Klassifizierungsergebnis, das heißt abhängig vom durch den Bediener bestimmten Eignungsgrad des Parameters oder Parametersatzes bzw. der entsprechenden Parameterwerte für eine bestimmte Anwendung (für einen bestimmten Kontext), übermittelt wird. Beispielsweise werden dem Algorithmus nur diejenigen Betriebsparameter oder -parametersätze übermittelt, die vom Bediener zuvor bei der Klassifizierung als für die zu Grunde liegende Anwendung geeignet angesehen worden sind. Eine Klassifizierung eines Betriebsparameters oder -parametersatzes als "geeignet" erfolgt durch den Bediener beispielsweise dann, wenn durch diesen Parameter oder -parametersatz bzw. die entsprechenden Parameterwerte eine Verbesserung des Ergebnisses bei der Durchführung des zu Grunde liegenden landwirtschaftlichen Arbeitsauftrags eingetreten ist.

Die Beurteilung des Arbeitsergebnisses kann anhand von Kriterien wie der Qualität des Bearbeitungsprozesses, der Effizienz des Bearbeitungsprozesses und der Bearbeitungsleistung erfolgen. Der Algorithmus zur Erzeugung optimierter Betriebsparameter oder -parametersätze erlaubt es dann vorzugsweise, die Daten in dem Datenpool so zu verarbeiten, dass auch für neue, unbekannte Kombinationen von Arbeitsmaschine und Arbeitsaggregat, insbesondere Traktor und Anbaugerät, jeweils optimale Maschinenparameter bzw. entsprechende Werte abgeleitet werden können. Beispielsweise ist es denkbar, dass in dem Datenpool ein vom Bediener zuvor für einen bestimmten Traktortyp beim Pflügen bei bestimmten Umgebungsbedingungen klassifizierter Parametersatz abgelegt ist und der Algorithmus denselben oder einen ähnlichen Parametersatz für einen anderen Traktortyp beim Pflügen oder denselben Traktortyp beim Grubbern bei vergleichbaren Umgebungsbedingungen als optimierten Parametersatz bereitstellt. Im einfachsten Fall kann der Algorithmus aber auch lediglich darin bestehen, als geeignet klassifizierte Betriebsparameter oder -parametersätze von als ungeeignet klassifizierten Betriebsparametern oder -parametersätzen zu unterscheiden und lediglich die als geeignet klassifizierten Betriebsparameter oder -parametersätze einem Fahrerassistenzsystem zum Abruf bereitzustellen. Dies ist allerdings nur für den Fall denkbar, dass in dem Datenpool sowohl die als geeignet klassifizierten als auch die als ungeeignet klassifizierten Betriebsparameter oder -parametersätze hinterlegt werden. Grundsätzlich ist es aber auch denkbar, in dem Datenpool von vorneherein nur die als geeignet klassifizierten Betriebsparameter oder -parametersätze zu hinterlegen (Crowd-Sourced-Truth-Datenpool) und die als ungeeignet klassifizierten zu verwerfen.

Mit dem vorschlagsgemäßen landwirtschaftlichen Arbeitssystem ist es also möglich, kontextbezogen eine Mehrzahl von Betriebsparametern, beispielsweise sensorisch und/oder durch den Bediener selbst, zu ermitteln, darunter insbesondere nicht nur Maschinenparameter, sondern auch Daten, bei denen es sich um solche zur Identität (Art und/oder Typ), zur geographischen Position und zum Betriebszustand der landwirtschaftlichen Arbeitsmaschine handelt, darunter insbesondere Umgebungsparameter. Weiter ist es dann möglich, im Rahmen einer Optimierungsroutine mindestens einen Betriebsparameter, insbesondere Maschinenparameter, in Hinblick auf zumindest eines der Kriterien "Qualität", "Effizienz" und "Leistung" durch das Fahrerassistenzsystem anzupassen. Das Ergebnis, also der jeweils angepasste Betriebsparameter oder ein Parametersatz mit dem jeweils angepassten Betriebsparameter, wird dann durch den Bediener klassifiziert und das Ergebnis der Klassifizierung dem Fahrerassistenzsystem übermittelt. Das Fahrerassistenzsystem übermittelt dann einzelne, beispielsweise nur die als geeignet klassifizierten, Betriebsparameter oder -parametersätze oder aber grundsätzlich alle, das heißt auch die als ungeeignet klassifizierten, Betriebsparameter oder -parametersätze an den Datenpool, auf den der Algorithmus dann zur Erzeugung optimierter Betriebsparameter oder -parametersätze für die Einstellung der landwirtschaftlichen Arbeitsmaschine und/oder eines Arbeitsaggregats zugreifen kann. Auch die vom Algorithmus erzeugten Daten können dann in dem Datenpool abgelegt werden. Man spricht in diesem Zusammenhang auch vom sogenannten "Data-Mining", womit eine automatische oder teilautomatische Auswertung großer Datenmengen zur Bestimmung bisher verborgener Zusammenhänge gemeint ist.

Die Ansprüche 2 und 3 definieren bevorzugte Möglichkeiten der Erfassung und Ausgabe von Daten durch das Fahrerassistenzsystem. Eine Erfassung von Daten, insbesondere der Mehrzahl von Betriebsparametern oder -parametersätzen, kann zum einen über Sensoren, zum anderen aber auch mittels bedienerseitigen Eingaben erfolgen. Auch ist es denkbar, solche Daten über eine interne Datenquelle, beispielsweise einen internen Speicher der landwirtschaftlichen Arbeitsmaschine oder einen internen Speicher des Arbeitsaggregats bzw. Anbaugeräts, oder über eine externe Datenquelle (GPS-Satellit, Wetterstation, Internet, Hofrechner oder dergleichen) bereitzustellen. Ein erfassbarer Betriebsparameter ist insbesondere auch die Art und/oder der Typ des Arbeitsaggregats, insbesondere Anbaugeräts. Eine Erfassung dieses Betriebsparameters, also die Erkennung beispielsweise des Anbaugeräts, kann auch automatisch erfolgen, insbesondere über RFID, Bluetooth, eine oder mehrere Kameras, M2X-Kommunikation, ISOBUS, TIM oder dergleichen.

Auch kann das Fahrerassistenzsystem zur natürlichsprachigen Erfassung und/oder Ausgabe von Daten konfiguriert sein (Anspruch 4).

Nach der bevorzugten Ausgestaltung gemäß Anspruch 5 ist ein Rechner zur Anwendung des Algorithmus und ein Datenspeicher zur Speicherung der klassifizierten Betriebsparameter oder -parametersätze in dem Datenpool vorgesehen. Der Datenspeicher oder ein separater Datenspeicher kann auch vorgesehen sein zur Speicherung der durch die Anwendung des Algorithmus erzeugten Betriebsparameter oder -parametersätze. Der Rechner und/oder der jeweilige Datenspeicher können Teil der landwirtschaftlichen Arbeitsmaschine sein. Besonders bevorzugt ist der Rechner und/oder der jeweilige Datenspeicher Teil eines externen Rechnernetzwerkes (Cloud) des landwirtschaftlichen Arbeitssystems. Die Anwendung des Algorithmus und/oder die Speicherung der besagten Daten erfolgt also insbesondere cloudbasiert.

Nach den Ansprüchen 6 und 7 kann ein Datenaustausch auch mit weiteren landwirtschaftlichen Arbeitsmaschinen und/oder Arbeitsaggregaten erfolgen. Insbesondere können auch mehrere landwirtschaftliche Arbeitsmaschinen dazu verwendet werden, Betriebsparameter wie zuvor beschrieben zu erfassen und klassifizierte Betriebsparameter abrufbar in dem Datenpool zu hinterlegen. Die vom Algorithmus erzeugten Betriebsparameter oder -parametersätze können außerdem auch anderen landwirtschaftlichen Arbeitsmaschinen und/oder Arbeitsaggregaten, insbesondere auch anderen, beispielsweise ähnlichen, Kombinationen von landwirtschaftlicher Arbeitsmaschine und Arbeitsaggregat bzw. Anbaugerät, zur Verfügung gestellt werden. Dies kann insbesondere mittels Telemetrie mit bidirektionaler Kommunikation und/oder über eine Offline-Optimierung am Hofrechner und anschließende Übertragung an die jeweilige landwirtschaftliche Arbeitsmaschine und/oder durch Aufspielen eines neuen Software-Updates erfolgen. Insbesondere können für eine bestimmte Region optimierte Einstellungsempfehlungen vorgesehen werden.

Die Ansprüche 8 und 9 definieren bevorzugte Betriebsparameter, insbesondere Maschinenparameter, Arbeitsparameter und Umgebungsparameter, die von dem Fahrerassistenzsystem erfasst und/oder bei der maschinenseitigen Optimierung und/oder der nachfolgenden Klassifizierung und/oder der nachfolgenden Anwendung des Algorithmus herangezogen werden können.

Anspruch 10 definiert bevorzugte Kombinationen von Betriebsparametern als zu klassifizierende Betriebsparametersätze.

Anspruch 11 definiert bevorzugte Kombinationen von Betriebsparametern, für die der Algorithmus optimale Betriebsparameter oder -parametersätze erzeugt.

Nach der bevorzugten Ausgestaltung gemäß Anspruch 12 erlaubt das Fahrerassistenzsystem dem Bediener, eine Optimierungsroutine auszuwählen, durch die ein oder mehrere Betriebsparameter nach einer vorgegebenen Vorschrift geändert werden können. Der durch diese Änderung erhaltene Betriebsparameter oder -parametersatz ist dann derjenige, der vom Bediener klassifiziert wird, beispielsweise als geeignet oder ungeeignet für die konkrete Anwendung bzw. den konkreten Kontext beurteilt wird. Die Optimierungsroutine kann insbesondere die Qualität des Bearbeitungsprozesses, die Effizienz des Bearbeitungsprozesses oder die Bearbeitungsleistung optimieren. Bevorzugt hat der Bediener entsprechend die Wahl zwischen einer Optimierungsroutine zur Optimierung der Qualität des Bearbeitungsprozesses, einer Optimierungsroutine zur Optimierung der Effizienz des Bearbeitungsprozesses und/oder einer Optimierungsroutine zur Optimierung der Bearbeitungsleistung. Nach Auswahl einer entsprechenden Optimierungsroutine kann auch vorgesehen sein, dass dem Bediener vom Fahrerassistenzsystem ein oder mehrere Vorschläge für mindestens einen zu ändernden Betriebsparameter vorgegeben werden, wobei der Bediener dann insbesondere die Möglichkeit hat, einen Vorschlag anzunehmen oder abzulehnen (Anspruch 13).

Weiterhin kann das Fahrerassistenzsystem auch konfiguriert sein, eine Sinnhaftigkeitsbewertung von Dateneingaben des Bedieners durchzuführen (Anspruch 14). Beispielsweise könnte ein Betriebsparametersatz, der den Arbeitsparameter "Arbeitsauftrag Pflügen" in einer bestimmten Situation, beispielsweise unmittelbar nach dem Wenden, beinhaltet, von dem Bediener unbeabsichtigt als geeignet klassifiziert werden, obwohl in dieser Situation ein Pflügen nicht sinnvoll ist. Das Fahrerassistenzsystem kann die Dateneingabe des Fahrers dann als Fehleingabe interpretieren und entsprechend verhindern, dass der klassifizierte Parametersatz in dem Datenpool hinterlegt wird.

Nach einer weiteren Lehre gemäß Anspruch 15, der eigenständige Bedeutung zukommt, wird ein Verfahren zur Optimierung von Betriebsparametern unter Verwendung eines landwirtschaftlichen Arbeitssystems, insbesondere eines vorschlagsgemäßen landwirtschaftlichen Arbeitssystems, beansprucht, mit mindestens einer landwirtschaftlichen Arbeitsmaschine, insbesondere einem Traktor, und mit mindestens einem Arbeitsaggregat zur Durchführung oder Unterstützung landwirtschaftlicher Arbeit, wobei die landwirtschaftliche Arbeitsmaschine ein Fahrerassistenzsystem zur Erfassung, Verarbeitung und Ausgabe von einen landwirtschaftlichen Arbeitsauftrag betreffenden Daten aufweist. Dabei wird vorschlagsgemäß mittels des Fahrerassistenzsystems eine Mehrzahl von Betriebsparametern erfasst und eine bedienerseitige Klassifizierung der erfassten Betriebsparameter oder von Betriebsparametersätzen mit mehreren verschiedenen erfassten Betriebsparametern ermöglicht. Weiter werden dabei einzelne oder alle klassifizierten Betriebsparameter oder -parametersätze abrufbar in einem Datenpool hinterlegt und die Betriebsparameter oder -parametersätze klassifizierungsbasiert einem Algorithmus zur Erzeugung optimierter Betriebsparameter oder -parametersätze für die Einstellung der landwirtschaftlichen Arbeitsmaschine und/oder des mindestens einen Arbeitsaggregats übermittelt.

Im Folgenden wird die Erfindung anhand einer lediglich ein Ausführungsbeispiel darstellenden Zeichnung näher erläutert. In der Zeichnung zeigt
- Fig. 1: eine schematische Darstellung eines vorschlagsgemäßen landwirtschaftlichen Arbeitssystems mit einer landwirtschaftlichen Arbeitsmaschine in Form eines Traktors und mit einem Anbaugerät in Form eines Pfluges und
- Fig. 2: eine schematische Darstellung eines Verfahrens zur Optimierung von Betriebsparametern unter Verwendung des landwirtschaftlichen Arbeitssystems gemäß Fig. 1.

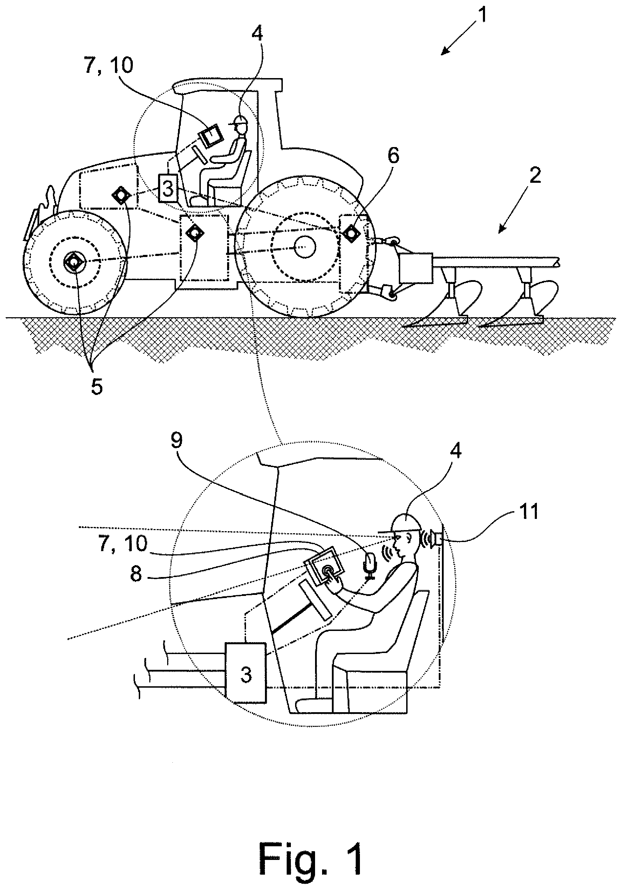

In Fig. 1 ist dargestellt, wie eine landwirtschaftliche Arbeitsmaschine 1, hier in Form eines Traktors, mittels eines Arbeitsaggregats 2 zur Durchführung oder Unterstützung landwirtschaftlicher Arbeit, hier eines Anbaugeräts in Form eines Pfluges, einen landwirtschaftlichen Arbeitsauftrag, hier eine Bodenbearbeitung, ausführt. Die landwirtschaftliche Arbeitsmaschine 1 und das Arbeitsaggregat 2 bzw. Anbaugerät sind hier Teil eines vorschlagsgemäßen landwirtschaftlichen Arbeitssystems zur Optimierung von Betriebsparametern von Arbeitsmaschine 1 und/oder Arbeitsaggregat 2. Die landwirtschaftliche Arbeitsmaschine 1 weist ein Fahrerassistenzsystem 3 zur Erfassung, Verarbeitung und Ausgabe von den landwirtschaftlichen Arbeitsauftrag, hier die Bodenbearbeitung, betreffenden Daten auf. Bei den Daten handelt es sich hier um Betriebsparameter oder Betriebsparametersätze mit mehreren verschiedenen Betriebsparametern.

Das Fahrerassistenzsystem 3 ist dabei vorschlagsgemäß konfiguriert, eine Mehrzahl von Betriebsparametern zu erfassen. Das Erfassen der Betriebsparameter kann, was im Weiteren noch näher erläutert wird, sensorisch und/oder durch Bedienereingaben und/oder durch Abrufen von einer internen und/oder externen Datenquelle erfolgen, um nur einige Beispiele zu nennen. Die Betriebsparameter stellen hier und vorzugsweise einen Betriebsparametersatz mit mehreren verschiedenen Betriebsparametern dar. Ein oder mehrere Betriebsparameter des Betriebsparametersatzes bzw. die entsprechenden Parameterwerte können während der Durchführung des Arbeitsauftrags geändert werden, um eine Optimierung durchzuführen. Dies erfolgt vorzugsweise im Rahmen einer vom Bediener 4 ausgewählten und gestarteten Optimierungsroutine, was im Weiteren noch erläutert wird.

Das Fahrerassistenzsystem 3 erlaubt es dem Bediener 4 nun, eine Klassifizierung des Betriebsparametersatzes, der hier und vorzugsweise den geänderten Betriebsparameter bzw. entsprechenden Parameterwert beinhaltet, durchzuführen. Mit einer Klassifizierung ist eine Bewertung des Betriebsparametersatzes, das heißt der entsprechenden Parameterwerte, durch den Bediener 4 gemeint, bei der der Bediener 4 entscheidet, ob durch die erfolgte Änderung des oder der Betriebsparameter des Betriebsparametersatzes eine Verbesserung des Arbeitsergebnisses erzielt worden ist oder nicht. Der Bediener 4 entscheidet damit, ob der geänderte Betriebsparameter bzw. -parametersatz geeignet oder ungeeignet zur Verbesserung des Arbeitsergebnisses ist. Der Bediener 4 klassifiziert den Betriebsparameter bzw. -parametersatz also insbesondere als geeignet oder ungeeignet für den konkreten Kontext, das heißt die konkrete Anwendung. Bei der Klassifizierung kann der Bediener 4 gemäß einer besonderen Ausführungsform nicht nur zwischen "geeignet" und "ungeeignet" entscheiden, sondern auch eine oder mehrere Abstufungen dazwischen vornehmen.

Hier und vorzugsweise beinhaltet der Betriebsparametersatz auch zusätzlich zu einem oder mehreren Maschinenparametern einen oder mehrere Arbeits- und Umgebungsparameter, die den konkreten Kontext näher spezifizieren, beispielsweise Landmaschinen- und/oder Anbaugeräteart, Wetter- und/oder Bodenverhältnisse oder dergleichen während der Durchführung des landwirtschaftlichen Arbeitsauftrags. Durch die bedienerseitige Klassifizierung kann also eine Aussage über die Eignung bestimmter Maschinenparameter in Kombination mit bestimmten Arbeits- und/oder Umgebungsparametern (z.B. Landmaschinen- und/oder Anbaugeräteart, Wetter- und/oder Bodenverhältnisse) getroffen werden.

Das vorschlagsgemäße landwirtschaftliche Arbeitssystem stellt ferner einen Datenpool bereit, in welchem zuvor klassifizierte Betriebsparameter oder hier und vorzugsweise Betriebsparametersätze mit verschiedenen Betriebsparametern abrufbar hinterlegt werden. Bei einem solchen Datenpool handelt es sich beispielsweise um einen Croud-Sourced-Truth-Datenpool, in welchem aus verschiedenen Quellen, das heißt von verschiedenen Fahrerassistenzsystemen 3, nur als geeignet klassifizierte Betriebsparametersätze hinterlegt werden.

Die Betriebsparameter bzw. hier die Betriebsparametersätze werden dann vorschlagsgemäß klassifizierungsbasiert, also abhängig von dem Klassifizierungsergebnis (z.B. Ergebnis "geeignet" bzw. "ungeeignet"), einem Algorithmus übermittelt, der kontextbezogen optimierte Betriebsparameter oder -parametersätze für die Einstellung einer landwirtschaftlichen Arbeitsmaschine 1 und/oder eines Arbeitsaggregats 2 erzeugt. Die von dem Algorithmus erzeugten Daten sind dann Betriebsparameter oder -parametersätze, die die landwirtschaftliche Arbeitsmaschine 1 und/oder das Arbeitsaggregat 2 und/oder eine andere landwirtschaftliche Arbeitsmaschine 1' bzw. ein anderes Arbeitsaggregat 2' nutzen kann, um bei gleichem oder ähnlichem Kontext, das heißt beispielsweise bei gleichen oder ähnlichen Wetter- und/oder Bodenverhältnissen, mit dafür optimierten Maschinenparametern betrieben werden zu können. Durch den Algorithmus können also kontextbezogen optimale Einstellungen ermittelt werden, die insbesondere auch bei zukünftigen Einsätzen ein und derselben landwirtschaftlichen Arbeitsmaschine 1 und/oder ein und desselben Arbeitsaggregats 2 oder aber auch bei Einsätzen anderer, insbesondere ähnlicher, Kombinationen von landwirtschaftlicher Arbeitsmaschine 1' und Arbeitsaggregat 2' verwendet werden können, um ein optimales Arbeitsergebnis zu erzielen.

Zur Erfassung von Daten, insbesondere der Mehrzahl von Betriebsparametern oder -parametersätzen, ist das Fahrerassistenzsystem 3 hier und vorzugsweise mit einem oder mehreren Sensoren 5 der landwirtschaftlichen Arbeitsmaschine 1 und/oder mit einem oder mehreren Sensoren 6 des Arbeitsaggregats 2 gekoppelt. Zur Erfassung der Daten ist auch eine Kopplung mit einer internen Datenquelle der landwirtschaftlichen Arbeitsmaschine 1 und/oder des Arbeitsaggregats 2 und/oder mit einer externen Datenquelle wie einem GPS-Satelliten, einer Wetterstation, dem Internet oder dem Hofrechner oder dergleichen denkbar. Auch kann zu diesem Zweck das Fahrerassistenzsystem 3 wie hier mit mindestens einem Eingabegerät 7 zur bedienerseitigen Dateneingabe, insbesondere einer Tastatur, einem Touchscreen 8 und/oder einem Mikrofon 9 gekoppelt sein. Das Eingabegerät 7 kann Teil der landwirtschaftlichen Arbeitsmaschine 1, des Arbeitsaggregats 2 und/oder eines Mobilgeräts sein. Über den jeweiligen Sensor 5, 6 können insbesondere Maschinenparameter und gegebenenfalls zumindest auch einige Arbeitsparameter und/oder Umgebungsparameter erfasst werden. Über das Eingabegerät 7 kann der Bediener 4 weitere Betriebsparameter, insbesondere nicht automatisch erfassbare Maschinen-, Arbeits- und/oder Umgebungsparameter, beispielsweise Landmaschinenund/oder Anbaugeräteart und/oder -typ, eingeben und dem Fahrerassistenzsystem 3 übermitteln.

Wie zuvor bereits beschrieben, erlaubt das Fahrerassistenzsystem 3 eine bedienerseitige Klassifizierung von Betriebsparametern bzw. hier einem jeweiligen Betriebsparametersatz mit mehreren verschiedenen Betriebsparametern. Zum Zwecke der Klassifizierung kann das Fahrerassistenzsystem 3 hier und vorzugsweise Daten an den Bediener 4 ausgeben, beispielsweise konkret bedienerseitig zu klassifizierende erfasste Betriebsparameter oder -parametersätze oder lediglich eine Anfrage, wie er die veränderte Situation beurteilt. Die Ausgabe von Daten an den Bediener, beispielsweise die Ausgabe eines Betriebsparametersatzes oder die Ausgabe einer Anfrage an den Bediener 4, erfolgt insbesondere über ein mit dem Fahrerassistenzsystem 3 gekoppeltes Ausgabegerät 10, insbesondere eine Display, einen Touchscreen 8 und/oder einen Lautsprecher 11.

Besonders bevorzugt ist das Fahrerassistenzsystem 3 zur natürlichsprachigen Erfassung von bedienerseitig übermittelten Daten und/oder zur natürlichsprachigen Ausgabe von Daten an den Bediener 4 geeignet ist.

Hier und vorzugsweise ist ein Rechner 12 zur Anwendung des Algorithmus und ein Datenspeicher 13 zur Speicherung der klassifizierten Betriebsparameter bzw. Parametersätze in dem Datenpool vorgesehen. Der Datenspeicher 13 dient hier und vorzugsweise auch zur Speicherung der durch Anwendung des Algorithmus erzeugten optimierten Betriebsparameter bzw. -parametersätze für die Einstellung einer landwirtschaftlichen Arbeitsmaschine 1 und/oder mindesten eines Arbeitsaggregats 2. Der Rechner 12 und/oder der jeweilige Datenspeicher 13 können Teil der landwirtschaftlichen Arbeitsmaschine 1 sein, sind hier und vorzugsweise aber Teil eines externen Rechnernetzwerks bzw. einer Cloud 14 des landwirtschaftlichen Arbeitssystems.

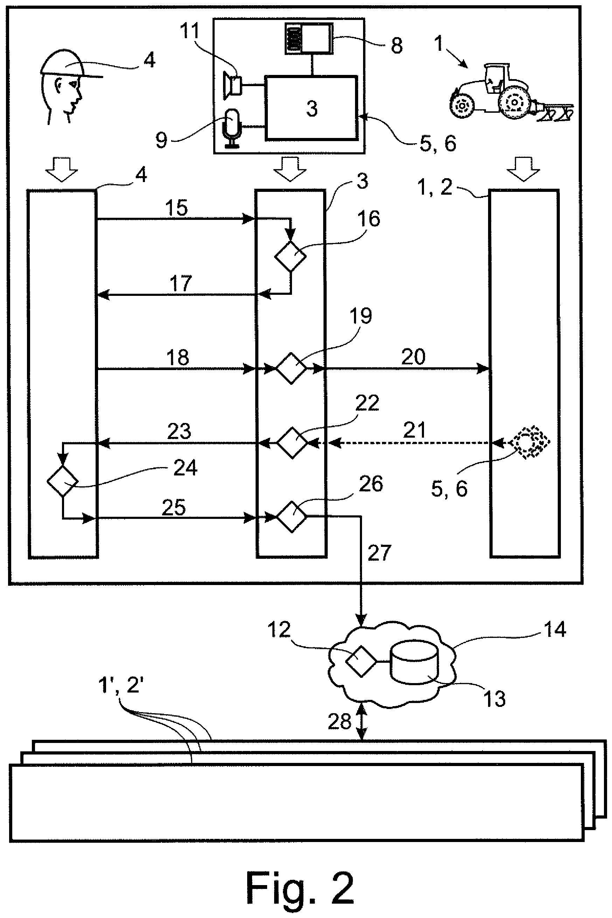

Eine Cloud 14 mit Rechner 12 und Datenspeicher 13 ist in Fig. 2 symbolisch dargestellt. Ebenfalls symbolisch dargestellt ist in Fig. 2, dass andere landwirtschaftliche Arbeitsmaschinen und/oder Arbeitsaggregate ebenfalls die mittels des Algorithmus optimierten Betriebsparameter bzw. -parametersätze aus der Cloud 14 abrufen können. In Fig. 2 sind verschiedene Kombinationen 1', 2' aus anderen landwirtschaftlichen Arbeitsmaschinen und Arbeitsaggregaten symbolisch durch Rechtecke dargestellt. Die dargestellten Kombinationen 1', 2', die die Daten aus der Cloud 14 nutzen, können dieselbe Landmaschinen- und/oder Anbaugeräteart und/oder denselben Landmaschinen- und/oder Anbaugerätetyp wie die anhand von Fig. 1 beschriebene Kombination aus landwirtschaftlicher Arbeitsmaschine 1 und Arbeitsaggregat 2, die die Daten, die der Algorithmus angewandt hat, zur Verfügung gestellt hat, aufweisen.

Grundsätzlich ist es auch denkbar, dem Algorithmus Daten von verschiedenen Fahrerassistenzsystemen verschiedener Kombinationen aus landwirtschaftlicher Arbeitsmaschine 1 und Arbeitsaggregat 2 zu übermitteln. So ist vorzugsweise vorgesehen, dass mehrere landwirtschaftliche Arbeitsmaschinen 1 des landwirtschaftlichen Arbeitssystems, insbesondere derselben Flotte, jeweils ein Fahrerassistenzsystem 3 zur Erfassung, Verarbeitung und Ausgabe von einen landwirtschaftlichen Arbeitsauftrag betreffenden Daten aufweisen, das konfiguriert ist, eine Mehrzahl von Betriebsparametern zu erfassen und eine bedienerseitige Klassifizierung der erfassten Betriebsparameter oder von Betriebsparametersätzen mit mehreren verschiedenen erfassten Betriebsparametern zu ermöglichen, wobei einzelne oder alle klassifizierten Betriebsparameter oder -parametersätze abrufbar in dem Datenpool hinterlegt werden und klassifizierungsbasiert einem Algorithmus zur Erzeugung optimierter Betriebsparameter oder -parametersätze für die Einstellung einer landwirtschaftlichen Arbeitsmaschine 1 und/oder mindestens eines Arbeitsaggregats 2 übermittelt werden.

Die Betriebsparameter sind hier insbesondere Maschinenparameter, Arbeitsparameter und/oder Umgebungsparameter.

Der jeweilige Maschinenparameter ist insbesondere gewählt aus der Gruppe umfassend die Fahrgeschwindigkeit, den Kraftstoffverbrauch, die abgegebene Antriebsleistung, das abgegebene Antriebsdrehmoment, die Drehzahl der Antriebswelle, die Motordrückung, die Schaltdrehzahl, Parameter der Schaltcharakteristik, Parameter der Schlupfregelung, Parameter der Zugkraftregelung, Parameter der Volllastregelung, den Luftdruck und/oder Reifentyp des vorderen und/oder hinteren Reifenpaars, das Gewicht einer vorderen und/oder hinteren Ballasteinrichtung, Parameter des Front- und/oder Heckhubwerks, die Oberlenkerposition, Parameter der Traktionszylinder, Parameter der Hydraulikventileinstellung, die Hohlscheibenposition, den Zugpunkt, den Pressdruck, den Auflagedruck, Parameter des Aufbereiterspaltes und/oder Parameter des Lenksystems sowie Einstellungsveränderungen des jeweiligen der Maschinenparameter.

Der jeweilige Arbeitsparameter ist insbesondere gewählt aus der Gruppe umfassend einen landwirtschaftlichen Arbeitsauftrag, die Art und/oder den Typ der landwirtschaftlichen Arbeitsmaschine, die Art und/oder den Typ des jeweiligen Arbeitsaggregats, insb. Anbaugeräts, die mechanische, hydraulische und/oder elektrische Anbindung des jeweiligen Arbeitsaggregats an die landwirtschaftliche Arbeitsmaschine, die Maschineneinstellungen vom ISOBUS, den Leistungsbedarf des jeweiligen Arbeitsaggregats, die Arbeitstiefe und/oder -breite des jeweiligen Arbeitsaggregats, den Flächenverbrauch und/oder die Flächenleistung.

Der jeweilige Umgebungsparameter ist insbesondere gewählt aus der Gruppe umfassend das Geländeprofil des Feldes und/oder der aktuellen Fahrspur, die Größe des Feldes, die aktuellen Wetterdaten, die GPS-Positionsdaten, die aktuelle Fruchtart, die aktuelle Populations-Sorte, die aktuelle Erntegutbeschaffenheit des Feldes und/oder der aktuellen Fahrspur (Feuchte, Dichte, Höhe), die aktuelle Bodenbeschaffenheit des Feldes und/oder der aktuellen Fahrspur (Feuchte, Dichte, Bodenart, Bodenzustand), und/oder die Historie des Feldes und/oder der aktuellen Fahrspur, insbesondere die oder eine vorherige Fruchtart, Populations-Sorte, Erntegutbeschaffenheit und/oder Bodenbeschaffenheit. Es können also nicht nur feldbezogene, sondern auch spurbezogene Daten herangezogen werden.

Die bedienerseitig zu klassifizierenden Parametersätze sind insbesondere Kombinationen von einem oder mehreren Maschinenparametern, insbesondere einem oder mehreren der genannten Maschinenparameter, und/oder einem oder mehreren Arbeitsparametern, insbesondere einem oder mehreren der genannten Arbeitsparameter, und/oder einem oder mehreren Umgebungsparametern, insbesondere einem oder mehreren der genannten Umgebungsparameter.

Der Algorithmus erzeugt hier und vorzugsweise die optimierten Betriebsparameter oder -parametersätze für bestimmte Kombinationen von Betriebsparametern, insbesondere für bestimmte Kombinationen von einer landwirtschaftlichen Arbeitsmaschine 1, einem Arbeitsaggregat 2 und einem oder mehreren Umgebungsparametern, insbesondere einem oder mehreren der genannten Umgebungsparameter.

Das Fahrerassistenzsystem 3 des vorschlagsemäßen landwirtschaftlichen Arbeitssystems ist hier und vorzugsweise so konfiguriert, dass der Bediener 4, insbesondere über ein ihm angezeigtes und/oder akustisch übermitteltes Auswahlmenü, eine Optimierungsroutine auswählen kann. In der Optimierungsroutine wird mindestens ein vorgegebener Betriebsparameter, vorzugsweise mindestens ein Maschinenparameter, insbesondere mindestens einer der zuvor genannten Maschinenparameter, nach einer vorgegebenen Vorschrift geändert. Basierend auf dem mindestens einen geänderten Betriebsparameter ermöglicht das Fahrerassistenzsystem 3 dem Bediener 4 wie zuvor erläutert eine Klassifizierung des Betriebsparameters bzw. hier eines Parametersatzes, der diesen Betriebsparameter und einen oder mehrere weitere Betriebsparameter enthält.

Hier und vorzugsweise kann der Bediener 4 die Optimierungsroutine aus der Gruppe wählen umfassend die Optimierung der Qualität des Bearbeitungsprozesses, die Optimierung der Effizienz des Bearbeitungsprozesses und die Optimierung der Bearbeitungsleistung.

Kriterien für die Qualität des Bearbeitungsprozesses sind beispielsweise das Pflugbild, das Streubild, die Schwadlage oder dergleichen oder auch Bodenschädigungen wie Bodenverdichtung und/oder -schmierung. Kriterien für die Effizienz des Bearbeitungsprozesses sind beispielsweise der Kraftstoffverbrauch bezogen auf die Fahrgeschwindigkeit der landwirtschaftlichen Arbeitsmaschine 1, der Kraftstoffverbrauch pro Flächeneinheit bezogen auf die Fahrgeschwindigkeit der landwirtschaftlichen Arbeitsmaschine 1, der Kraftstoffverbrauch bezogen auf die benötigte Zeit zur Durchführung eines landwirtschaftlichen Arbeitsauftrags oder der Kraftstoffverbrauch pro Flächeneinheit bezogen auf die benötigte Zeit zur Durchführung eines landwirtschaftlichen Arbeitsauftrags. Kriterien für die Bearbeitungsleistung sind beispielsweise die bearbeitete Fläche pro Zeiteinheit oder die bearbeitete Fläche pro Zeiteinheit bezogen auf die Fahrgeschwindigkeit der landwirtschaftlichen Arbeitsmaschine 1.

Hier und vorzugsweise ist das Fahrerassistenzsystem 3 ferner konfiguriert, nach einer bedienerseitigen Auswahl einer entsprechenden Optimierungsroutine dem Bediener 4 einen oder mehrere Vorschläge für den mindestens einen zu ändernden Betriebsparameter auszugeben. Der Bediener 4 erhält dann die Möglichkeit, den Vorschlag oder mindestens einen der Vorschläge anzunehmen und/oder abzulehnen. Beispielsweise wird dem Bediener 4 eine Liste mit mehreren Vorschlägen angezeigt, die insbesondere nach einer bestimmten Reihenfolge sortiert ist, beispielsweise nach dem Grad der zu erwartenden Auswirkung auf die Qualität des Bearbeitungsprozesses und/oder auf die Effizienz des Bearbeitungsprozesses und/oder auf die Bearbeitungsleistung. Auch ist es denkbar, dass dem Bediener 4 jeweils nur ein Vorschlag angezeigt wird, wobei nach dessen Ablehnung durch den Bediener 4 ein neuer Vorschlag ausgegeben wird. Auch hier kann eine bestimmte Reihenfolge, in der die Vorschläge ausgegeben werden, vorgesehen sein, die sich beispielsweise auch nach dem Grad der zu erwartenden Auswirkung auf die Qualität des Bearbeitungsprozesses und/oder auf die Effizienz des Bearbeitungsprozesses und/oder auf die Bearbeitungsleistung richtet.

Nachdem nun ein Vorschlag bedienerseitig angenommen worden ist, führt das Fahrerassistenzsystem 3 hier und vorzugsweise die Optimierungsroutine so aus, dass als Ergebnis mindestens ein geänderter Betriebsparameter, insbesondere Maschinenparameter, oder Betriebsparametersatz mit mindestens einem geänderten Betriebsparameter erzeugt wird, woraufhin der Bediener 4 dann eine Klassifizierung des geänderten Betriebsparameters bzw. -parametersatzes durchführen kann, indem er selbst die Qualität des Bearbeitungsprozesses, die Effizienz des Bearbeitungsprozesses oder die Bearbeitungsleistung gegenüber dem Zustand vor der Änderung des Betriebsparameters bzw. -parametersatzes beurteilt. Zur Beurteilung kann dem Bediener 4 durch das Fahrerassistenzsystem 3, insbesondere akustisch und/oder visuell, beispielsweise die Frage gestellt werden, ob eine Verbesserung der Qualität des Bearbeitungsprozesses bzw. der Effizienz des Bearbeitungsprozesses bzw. der Bearbeitungsleistung feststellbar ist. Die Frage kann der Bediener 4 dann, insbesondere durch eine Spracheingabe, Touchscreeneingabe oder Tasteneingabe, beispielsweise mit "ja" oder "nein" beantworten.

Schließlich kann das Fahrerassistenzsystem 3 konfiguriert sein, eine Sinnhaftigkeitsbewertung von Dateneingaben des Bedieners 4 durchzuführen. So kann es vorkommen, dass der Bediener 4 beispielsweise eine Fehleingabe macht, die zu einer fehlerhaften Klassifizierung führen würde. Das Fahrerassistenzsystem 3 kann dann nach vorgegebenen Vorschriften verifizieren, ob die Eingabe Sinn macht oder nicht. Auf diese Weise kann verhindert werden, dass falsch klassifizierte Betriebsparameter oder -parametersätze im Datenpool hinterlegt und dem Algorithmus übermittelt werden.

Einen beispielhaften Ablauf eines Verfahrens zur Optimierung von Betriebsparametern unter Verwendung eines vorschlagsgemäßen landwirtschaftlichen Arbeitssystems zeigt Fig. 2.

Das Fahrerassistenzsystem 3 erfasst auf verschiedene Weise unterschiedliche Betriebsparameter, beispielsweise über einen oder mehrere Sensoren 5 der landwirtschaftlichen Arbeitsmaschine 1 und/oder über einen oder mehrere Sensoren 6 des jeweiligen Arbeitsaggregats 2. Hierbei besteht auch die Möglichkeit der Anwendung einer Sensorfusion, bei der Daten aus unterschiedlichen der Sensoren 5, 6 verknüpft werden können, um dadurch Informationen besserer Qualität zu gewinnen. Weiterhin ist gemäß Fig. 2 das Fahrerassistenzsystem 3 zur bedienerseitigen Dateneingabe mit einem Touchscreen 8 und/oder einem Mikrofon 9 versehen. Zur Ausgabe von Daten an den Bediener 4 ist das Fahrerassistenzsystem 3 hier und vorzugsweise mit einem Lautsprecher 11 und dem Touchscreen 8 versehen.

Der Bediener 4 kann bei dem hier dargestellten Ausführungsbeispiel des vorschlagsgemäßen Verfahrens eine Optimierungsroutine starten (Pfeil 15), woraufhin das Fahrerassistenzsystem 3 eine Liste mit Vorschlägen in Form von veränderbaren Maschinenparametern erzeugt (Symbol 16).

Die Liste mit den erzeugten Vorschlägen wird dann dem Bediener 4 ausgegeben, beispielsweise natürlichsprachig (Pfeil 17).

Der Bediener 4 wählt dann aus der Liste einen Vorschlag aus (Pfeil 18), woraufhin das Fahrerassistenzsystem 3 mindestens einen geänderten Maschinenparameter erzeugt (Symbol 19) und einen entsprechenden Steuerbefehl an die landwirtschaftliche Arbeitsmaschine 1 und/oder das Arbeitsaggregat 2 übermittelt (Pfeil 20).

Die landwirtschaftliche Arbeitsmaschine 1 und/oder das Arbeitsaggregat 2 ändert daraufhin die Parametereinstellungen entsprechend. Es ist auch denkbar, insbesondere wenn kein automatisch verstellbarer Aktor vorgesehen ist, dass der Fahrer selbst die Änderung der Parametereinstellung durchführt, beispielsweise eine andere Oberlenkerposition durch anderes Verbolzen des Oberlenkers einstellt. Dadurch kann sich das Arbeitsergebnis, beispielsweise die Qualität des Bearbeitungsprozesses, die Effizienz des Bearbeitungsprozesses oder die Bearbeitungsleistung, ändern.

Optional können der bzw. die geänderten Maschinenparameter auch über Sensoren 5, 6 der landwirtschaftlichen Arbeitsmaschine 1 und/oder des Arbeitsaggregats 2 ermittelt und an das Fahrerassistenzsystem 3 übertragen werden (Pfeil 21).

Nach der erfolgten Änderung des mindestens einen Maschinenparameters erzeugt das Fahrerassistenzsystem 3 eine Abfrage (Symbol 22), die an den Bediener 4, ggf. zusammen mit der Anzeige des geänderten Maschinenparameters oder eines Betriebsparametersatzes mit dem geänderten Maschinenparameter, übermittelt wird (Pfeil 23).

Der Bediener 4 führt dann selbst einen Entscheidungsprozess anhand einer Beurteilung der Gesamtsituation durch (Symbol 24) und übermittelt das Ergebnis durch entsprechende Eingabe, beispielsweise über den Touchscreen 8 oder das Mikrofon 9, an das Fahrerassistenzsystem (Pfeil 25).

Das Fahrerassistenzsystem 3 führt dann eine Aufbereitung der Daten durch, die beispielsweise ein Verknüpfen des jeweils geänderten Maschinenparameters mit anderen Betriebsparametern, beispielsweise Umgebungsparametern, beinhaltet (Symbol 26). Hierbei kann das Fahrerassistenzsystem 3 auch eine Sinnhaftigkeitsbewertung von bedienerseitigen Dateneingaben durchführen.

Die aufbereiteten Daten werden dann in die Cloud 14 übertragen, die einen Rechner 12 zur Anwendung eines Algorithmus zur Erzeugung optimierter Betriebsparameter oder -parametersätze und einen Datenspeicher 13 zur Speicherung der klassifizierten Betriebsparameter oder -parametersätze und ggf. zur Speicherung der durch Anwendung des Algorithmus erzeugten optimierten Betriebsparameter oder -parametersätze aufweist (Pfeil 27).

Die durch den Algorithmus erzeugten optimierten Betriebsparameter oder -parametersätze können schließlich an unterschiedliche Kombinationen 1', 2' von landwirtschaftlicher Arbeitsmaschine 1 und Arbeitsaggregat 2 übertragen werden und von diesen als für die jeweilige Anwendung optimierte Betriebsparameter oder -parametersätze verwendet werden, wobei vorzugsweise auch die unterschiedlichen Kombinationen 1', 2' von landwirtschaftlicher Arbeitsmaschine 1 und Arbeitsaggregat 2 eigene Daten in die Cloud 14 übertragen können, insbesondere auf die zuvor beschriebene Weise durch einen entsprechenden Algorithmus erzeugte optimierte Betriebsparameter oder -parametersätze (Pfeil 28).

### Bezugszeichenliste

- 1: Landwirtschaftliche Arbeitsmaschine
- 2: Arbeitsaggregat
- 3: Fahrerassistenzsystem
- 4: Bediener
- 5, 6: Sensoren
- 7: Eingabegerät
- 8: Touchscreen
- 9: Mikrofon
- 10: Ausgabegerät
- 11: Lautsprecher
- 12: Rechner
- 13: Datenspeicher
- 14: externes Rechnernetzwerk (Cloud)
- 15-28: Flussdiagrammsymbole
- 1', 2': Arbeitsmaschine/Arbeitsaggregat-Kombinationen

## Patentansprüche

1. Landwirtschaftliches Arbeitssystem zur Optimierung von Betriebsparametern mit mindestens einer landwirtschaftlichen Arbeitsmaschine (1), insbesondere mindestens einem Traktor, und mit mindestens einem mit der landwirtschaftlichen Arbeitsmaschine (1) gekoppelten Arbeitsaggregat (2) zur Durchführung oder Unterstützung landwirtschaftlicher Arbeit, wobei die landwirtschaftliche Arbeitsmaschine (1) ein Fahrerassistenzsystem (3) zur Erfassung, Verarbeitung und Ausgabe von einen landwirtschaftlichen Arbeitsauftrag betreffenden Daten aufweist,
**dadurch gekennzeichnet,**
**dass** das Fahrerassistenzsystem (3) konfiguriert ist, eine Mehrzahl von Betriebsparametern zu erfassen und eine bedienerseitige Klassifizierung der erfassten Betriebsparameter oder von Betriebsparametersätzen mit mehreren verschiedenen erfassten Betriebsparametern zu ermöglichen,
**dass** einzelne oder alle klassifizierten Betriebsparameter oder -parametersätze abrufbar in einem Datenpool hinterlegt werden und
**dass** die Betriebsparameter oder -parametersätze klassifizierungsbasiert einem Algorithmus zur Erzeugung optimierter Betriebsparameter oder -parametersätze für die Einstellung der landwirtschaftlichen Arbeitsmaschine (1) und/oder des mindestens einen Arbeitsaggregats (2) übermittelt werden.

2. Landwirtschaftliches Arbeitssystem nach Anspruch 1, **dadurch gekennzeichnet, dass** das Fahrerassistenzsystem (3) zur Erfassung von Daten, insbesondere der Mehrzahl von Betriebsparametern oder -parametersätzen, mit mindestens einem Sensor (5) der landwirtschaftlichen Arbeitsmaschine (1), mit mindestens einem Sensor (6) des jeweiligen Arbeitsaggregats (2), mit mindestens einer internen Datenquelle, mit mindestens einer externen Datenquelle und/oder mit mindestens einem Eingabegerät (7) zur bedienerseitigen Dateneingabe, insbesondere einer Tastatur, einem Touchscreen (8) und/oder einem Mikrofon (9), gekoppelt ist.

3. Landwirtschaftliches Arbeitssystem nach Anspruch 1 oder 2, **dadurch gekennzeichnet, dass** das Fahrerassistenzsystem (3) zur Ausgabe von Daten an den Bediener (4), insbesondere von bedienerseitig zu klassifizierenden, zuvor erfassten Betriebsparametern oder -parametersätzen und/oder einer die Klassifizierung von zuvor erfassten Betriebsparametern oder -parametersätzen betreffenden Anfrage, mit mindestens einem Ausgabegerät (10), insbesondere einem Display, einem Touchscreen (8) und/oder einem Lautsprecher (11), gekoppelt ist.

4. Landwirtschaftliches Arbeitssystem nach einem der vorhergehenden Ansprüche, **dadurch gekennzeichnet, dass** das Fahrerassistenzsystem (3) konfiguriert ist zur natürlichsprachigen Erfassung von bedienerseitig übermittelten Daten und/oder zur natürlichsprachigen Ausgabe von Daten an den Bediener (4).

5. Landwirtschaftliches Arbeitssystem nach einem der vorhergehenden Ansprüche, **dadurch gekennzeichnet, dass** ein Rechner (12) zur Anwendung des Algorithmus und ein Datenspeicher (13) zu Speicherung der klassifizierten Betriebsparameter oder -parametersätze in dem Datenpool und insbesondere ein Datenspeicher (13) zur Speicherung der durch Anwendung des Algorithmus erzeugten optimierten Betriebsparameter oder -parametersätze für die Einstellung der landwirtschaftlichen Arbeitsmaschine (1) und/oder des mindestens einen Arbeitsaggregats (2) vorgesehen ist, vorzugsweise, dass der Rechner (12) und/oder der jeweilige Datenspeicher (13) Teil der landwirtschaftlichen Arbeitsmaschine (1) und/oder Teil eines externen Rechnernetzwerkes (14) des landwirtschaftlichen Arbeitssystems ist.

6. Landwirtschaftliches Arbeitssystem nach einem der vorhergehenden Ansprüche, **dadurch gekennzeichnet, dass** mehrere landwirtschaftliche Arbeitsmaschinen (1) des landwirtschaftlichen Arbeitssystems, insbesondere derselben Flotte, jeweils ein Fahrerassistenzsystem (3) zur Erfassung, Verarbeitung und Ausgabe von einen landwirtschaftlichen Arbeitsauftrag betreffenden Daten aufweisen, das konfiguriert ist, eine Mehrzahl von Betriebsparametern zu erfassen und eine bedienerseitige Klassifizierung der erfassten Betriebsparameter oder von Betriebsparametersätzen mit mehreren verschiedenen erfassten Betriebsparametern zu ermöglichen, wobei einzelne oder alle klassifizierten Betriebsparameter oder -parametersätze abrufbar in dem Datenpool hinterlegt werden und klassifizierungsbasiert einem Algorithmus zur Erzeugung optimierter Betriebsparameter oder -parametersätze für die Einstellung einer landwirtschaftlichen Arbeitsmaschine (1) und/oder mindestens eines Arbeitsaggregats (2) übermittelt werden.

7. Landwirtschaftliches Arbeitssystem nach einem der vorhergehenden Ansprüche, **dadurch gekennzeichnet, dass** die unter Anwendung des Algorithmus optimierten Betriebsparameter oder -parametersätze von anderen landwirtschaftlichen Arbeitsmaschinen (1') und/oder Arbeitsaggregaten (2') des landwirtschaftlichen Arbeitssystems abrufbar sind, insbesondere auch von anderen Kombinationen von landwirtschaftlichen Arbeitsmaschinen (1') und Arbeitsaggregaten (2').

8. Landwirtschaftliches Arbeitssystem nach einem der vorhergehenden Ansprüche, **dadurch gekennzeichnet, dass** als Betriebsparameter ein oder mehrere Maschinenparameter der landwirtschaftlichen Arbeitsmaschine (1) und/oder des jeweiligen Arbeitsaggregats (2), Arbeitsparameter und/oder Umgebungsparameter erfasst werden.

9. Landwirtschaftliches Arbeitssystem nach Anspruch 8, **dadurch gekennzeichnet, dass**
- der jeweilige Maschinenparameter gewählt ist aus der Gruppe umfassend die Fahrgeschwindigkeit, den Kraftstoffverbrauch, die abgegebene Antriebsleistung, das abgegebene Antriebsdrehmoment, die Drehzahl der Antriebswelle, die Motordrückung, die Schaltdrehzahl, Parameter der Schaltcharakteristik, Parameter der Schlupfregelung, Parameter der Zugkraftregelung, Parameter der Volllastregelung, den Luftdruck und/oder Reifentyp des vorderen und/oder hinteren Reifenpaars, das Gewicht einer vorderen und/oder hinteren Ballasteinrichtung, Parameter des Front- und/oder Heckhubwerks, die Oberlenkerposition, Parameter der Traktionszylinder, Parameter der Hydraulikventileinstellung, die Hohlscheibenposition, den Zugpunkt, den Pressdruck, den Auflagedruck, Parameter des Aufbereiterspaltes und/oder Parameter des Lenksystems sowie Einstellungsveränderungen des jeweiligen der Maschinenparameter, und/oder,
- der jeweilige Arbeitsparameter gewählt ist aus der Gruppe umfassend einen landwirtschaftlichen Arbeitsauftrag, die Art und/oder den Typ der landwirtschaftlichen Arbeitsmaschine (1), die Art und/oder den Typ des jeweiligen Arbeitsaggregats (2), insbesondere Anbaugeräts, die mechanische, hydraulische und/oder elektrische Anbindung des jeweiligen Arbeitsaggregats (2) an die landwirtschaftliche Arbeitsmaschine (1), die Maschineneinstellungen vom ISOBUS, den Leistungsbedarf des jeweiligen Arbeitsaggregats (2), die Arbeitstiefe und/oder -breite des jeweiligen Arbeitsaggregats (2), den Flächenverbrauch und/oder die Flächenleistung, und/oder,
- der jeweilige Umgebungsparameter gewählt ist aus der Gruppe umfassend das Geländeprofil des Feldes und/oder der aktuellen Fahrspur, die Größe des Feldes, die aktuellen Wetterdaten, die GPS-Positionsdaten, die aktuelle Fruchtart, die aktuelle Populations-Sorte, die aktuelle Erntegutbeschaffenheit des Feldes und/oder der aktuellen Fahrspur, die aktuelle Bodenbeschaffenheit des Feldes und/oder der aktuellen Fahrspur, und/oder die Historie des Feldes und/oder der aktuellen Fahrspur, insbesondere die oder eine vorherige Fruchtart, Populations-Sorte, Erntegutbeschaffenheit und/oder Bodenbeschaffenheit.

10. Landwirtschaftliches Arbeitssystem nach einem der vorhergehenden Ansprüche, **dadurch gekennzeichnet, dass** die zu klassifizierenden Betriebsparametersätze Kombinationen von einem oder mehreren Maschinenparametern, insbesondere einem oder mehreren Maschinenparametern nach Anspruch 9, und/oder einem oder mehreren Arbeitsparametern, insbesondere einem oder mehreren Arbeitsparametern nach Anspruch 9, und/oder einem oder mehreren Umgebungsparametern, insbesondere einem oder mehreren Umgebungsparametern nach Anspruch 9, sind.

11. Landwirtschaftliches Arbeitssystem nach einem der vorhergehenden Ansprüche, **dadurch gekennzeichnet, dass** der Algorithmus die optimierten Betriebsparameter oder -parametersätze für bestimmte Kombinationen von Betriebsparametern, vorzugsweise für bestimmte Kombinationen von einer landwirtschaftlichen Arbeitsmaschine (1), einem Arbeitsaggregat (2) und einem oder mehreren Umgebungsparametern, insbesondere einem oder mehreren Umgebungsparametern nach Anspruch 9, erzeugt.

12. Landwirtschaftliches Arbeitssystem nach einem der vorhergehenden Ansprüche, **dadurch gekennzeichnet, dass** das Fahrerassistenzsystem (3) derart konfiguriert ist, dass bedienerseitig, insbesondere über ein Auswahlmenü, eine Optimierungsroutine ausgewählt werden kann, in der mindestens ein vorgegebener Betriebsparameter, vorzugsweise Maschinenparameter, insbesondere Maschinenparameter nach Anspruch 9, nach einer vorgegebenen Vorschrift geändert wird und dann basierend auf dem mindestens einen geänderten Betriebsparameter dem Bediener (4) eine Klassifizierung des geänderten Betriebsparameters oder eines diesen und weitere Betriebsparameter enthaltenden Betriebsparametersatzes ermöglicht wird, vorzugsweise, dass die Optimierungsroutine gewählt ist aus der Gruppe umfassend die Optimierung der Qualität des Bearbeitungsprozesses, die Optimierung der Effizienz des Bearbeitungsprozesses und/oder die Optimierung der Bearbeitungsleistung.

13. Landwirtschaftliches Arbeitssystem nach Anspruch 12, **dadurch gekennzeichnet, dass** das Fahrerassistenzsystem (3) konfiguriert ist, nach einer bedienerseitigen Auswahl einer Optimierungsroutine dem Bediener (4) einen oder mehrere Vorschläge für den mindestens einen zu ändernden Betriebsparameter auszugeben und eine bedienerseitige Annahme und/oder Ablehnung des Vorschlags oder mindestens eines der Vorschläge zu ermöglichen.

14. Landwirtschaftliches Arbeitssystem nach einem der vorhergehenden Ansprüche, **dadurch gekennzeichnet, dass** das Fahrerassistenzsystem (3) konfiguriert ist, eine Sinnhaftigkeitsbewertung von bedienerseitigen Dateneingaben durchzuführen.

15. Verfahren zur Optimierung von Betriebsparametern unter Verwendung eines landwirtschaftlichen Arbeitssystems, insbesondere eines landwirtschaftlichen Arbeitssystems nach einem der vorhergehenden Ansprüche, mit mindestens einer landwirtschaftlichen Arbeitsmaschine (1), insbesondere mindestens einem Traktor, und mit mindestens einem mit der landwirtschaftlichen Arbeitsmaschine (1) gekoppelten Arbeitsaggregat (2) zur Durchführung oder Unterstützung landwirtschaftlicher Arbeit, wobei die landwirtschaftliche Arbeitsmaschine (1) ein Fahrerassistenzsystem (3) zur Erfassung, Verarbeitung und Ausgabe von einen landwirtschaftlichen Arbeitsauftrag betreffenden Daten aufweist,
**dadurch gekennzeichnet,**
**dass** mittels des Fahrerassistenzsystems (3) eine Mehrzahl von Betriebsparametern erfasst wird und eine bedienerseitige Klassifizierung der erfassten Betriebsparameter oder von Betriebsparametersätzen mit mehreren verschiedenen erfassten Betriebsparametern ermöglicht wird,
**dass** einzelne oder alle klassifizierten Betriebsparameter oder -parametersätze abrufbar in einem Datenpool hinterlegt werden und
**dass** die Betriebsparameter oder -parametersätze klassifizierungsbasiert einem Algorithmus zur Erzeugung optimierter Betriebsparameter oder -parametersätze für die Einstellung der landwirtschaftlichen Arbeitsmaschine (1) und/oder des mindestens einen Arbeitsaggregats (2) übermittelt werden.

## Claims

1. An agricultural operational system for optimizing operating parameters, with at least one agricultural working machine (1), in particular at least one tractor, and with at least one working assembly (2) coupled to the agricultural working machine (1) for carrying out or supporting agricultural work, wherein the agricultural working machine (1) has a driver assistance system (3) for detecting, processing and outputting data relating to an agricultural operational assignment,
**characterized in that**
the driver assistance system (1) is configured to detect a plurality of operating parameters and to enable an operator to classify the detected operating parameters or sets of operating parameters with a plurality of different detected operating parameters,
**in that** individual or all of the classified operating parameters or operating parameter sets are retrievably stored in a data pool, and
**in that** the operating parameters or operating parameter sets are transmitted, on the basis of the classification, to an algorithm for the generation of optimized operating parameters or operating parameter sets for the adjustment of the agricultural working machine (1) and/or of the at least one working assembly (2).

2. The agricultural operational system according to claim 1, **characterized in that** for the detection of data, in particular of the plurality of operating parameters or operating parameter sets, the driver assistance system (3) is coupled to at least one sensor (5) of the agricultural working machine (1), to at least one sensor (6) of the respective working assembly (2), to at least one internal data source, to at least one external data source and/or to at least one input device (7) for the operator to input data, in particular a keyboard, a touchscreen (8) and/or a microphone (9).

3. The agricultural operational system according to claim 1 or claim 2, **characterized in that** the driver assistance system (3) is coupled to at least one output device (10), in particular a display, a touchscreen (8) and/or a microphone (11), in order to output data to the operator (4), in particular previously detected operating parameters or sets of operating parameters to be classified by the operator and/or a query relating to the classification of previously detected operating parameters or sets of operating parameters.

4. The agricultural operational system according to one of the preceding claims, **characterized in that** the driver assistance system (3) is configured for the natural language detection of data transmitted by the operator and/or for the natural language output of data to the operator (4).

5. The agricultural operational system according to one of the preceding claims, **characterized in that** a computer (12) is provided for implementing the algorithm and a data store (13) is provided for storing the classified operating parameters or operating parameter sets in the data pool, and in particular, a data store (13) is provided for storing the optimized operating parameters or operating parameter sets generated by implementing the algorithm for the adjustment of the agricultural working machine (1) and/or of the at least one working assembly (2), preferably **in that** the computer (12) and/or the respective data store (13) is part of the agricultural working machine (1) and/or part of an external computer network (14) of the agricultural operational system.

6. The agricultural operational system according to one of the preceding claims, **characterized in that** a plurality of agricultural working machines (1) of the agricultural operational system, in particular of the same fleet, in each instance has a driver assistance system (3) for detecting, processing and outputting data relating to an agricultural operational assignment which is configured to detect a plurality of operating parameters and to enable the operator to classify the detected operating parameters or operating parameter sets with a plurality of different detected operating parameters, wherein individual or all of the classified operating parameters or sets of operating parameters are retrievably stored in the data pool and are transmitted, on the basis of the classification, to an algorithm for generating optimized operating parameters or sets of operating parameters for the adjustment of an agricultural working machine (1) and/or of at least one working assembly (2).

7. The agricultural operational system according to one of the preceding claims, **characterized in that** the operating parameters or operating parameter sets of other agricultural working machines (1') and/or working assemblies (2') of the agricultural operational system, in particular of other combinations of agricultural working machines (1') and working assemblies (2') which have been optimized by implementing the algorithm can be retrieved.

8. The agricultural operational system according to one of the preceding claims, **characterized in that** one or more machine parameters of the agricultural working machine (1) and/or of the respective working assembly (2), working parameters and/or environmental parameters are detected as the operating parameters.

9. The agricultural operational system according to claim 8, **characterized in that**
- the respective machine parameter is selected from the group comprising the driving speed, the fuel consumption, the delivered driving power, the delivered drive torque, the rotational speed of the driveshaft, the engine overloading, the switching speed, the parameters of the shifting characteristics, the parameters of the slip control, the parameters of the traction control, the parameters of the full load control, the air pressure and/or tyre type of the front and/or rear pair of tyres, the weight of a front and/or rear ballast device, the parameters of the front and/or rear lifting mechanism, the upper link position, the parameters of the traction cylinder, the parameters of the hydraulic valve setting, the concave disk position, the pull point, the pressing force, the ground pressure, the parameters of the conditioner gap and/or the parameters of the steering system, as well as adjustments of the respective machine parameters, and/or
- the respective working parameter is selected from the group comprising an agricultural operational assignment, the kind and/or the type of the agricultural working machine (1), the kind and/or the type of the respective working assembly (2), in particular the mounted implement, the mechanical, hydraulic and/or electrical connection of the respective working assembly (2) to the agricultural working machine (1), the ISOBUS machine settings, the power requirement for the respective working assembly (2), the working depth and/or working width of the respective working assembly (2), the land usage and/or surface output, and/or
- the respective environmental parameter is selected from the group comprising the ground profile of the field and/or of the current drive track, the size of a field, the current weather data, the GPS positioning data, the current crop type, the current population variety, the current nature of the harvested material from the field and/or from the current drive track, the current nature of the soil from the field and/or from the current drive track, and/or the history of the field and/or of the current drive track, in particular the or a previous crop type, population variety, nature of the harvested material and/or nature of the soil.

10. The agricultural operational system according to one of the preceding claims, **characterized in that** the operating parameter sets to be classified are combinations of one or more machine parameters, in particular of one or more machine parameters according to claim 9, and/or of one or more working parameters, in particular of one or more working parameters according to claim 9, and/or of one or more environmental parameters, in particular of one or more environmental parameters according to claim 9.

11. The agricultural operational system according to one of the preceding claims, **characterized in that** the algorithm generates the optimized operating parameters or sets of operating parameters for specific combinations of operating parameters, preferably for specific combinations of an agricultural working machine (1), a working assembly (2) and of one or more environmental parameters, in particular of one or more environmental parameters according to claim 9.

12. The agricultural operational system according to one of the preceding claims, **characterized in that** the driver assistance system (3) is configured so that the operator can select, in particular via a selection menu, an optimization routine in which at least one specified operating parameter, preferably machine parameter, in particular machine parameter according to claim 9, can be changed in accordance with a predetermined rule and then, based on the at least one changed operating parameter, the operator (4) is permitted to classify the changed operating parameter or one of them and other operating parameter sets containing operating parameters, preferably **in that** the optimization routine is selected from the group comprising the optimization of the quality of the working process, the optimization of the efficiency of the working process and/or the optimization of the working performance.

13. The agricultural operational system according to claim 12, **characterized in that** the driver assistance system (3) is configured to output to the operator (4) one or more suggestions for the at least one operating parameter to be changed after an optimization routine has been selected by the operator and to enable the operator to accept and/or decline the suggestion or at least one of the suggestions.

14. The agricultural operational system according to one of the preceding claims, **characterized in that** the driver assistance system (3) is configured to carry out an assessment of reasonableness of data inputs made by the operator.

15. A method for optimizing operating parameters using an agricultural operational system, in particular an agricultural operational system according to one of the preceding claims, with at least one agricultural working machine (1), in particular at least one tractor, and with at least one working assembly (2) coupled to the agricultural working machine (1) for carrying out or supporting agricultural work, wherein the agricultural working machine (1) has a driver assistance system (3) for detecting, processing and outputting data relating to an agricultural operational assignment,
**characterized in that**
by means of the driver assistance system (3), a plurality of operating parameters are detected and an operator is permitted to classify the detected operating parameters or sets of operating parameters with a plurality of different detected operating parameters,
**in that** individual or all of the classified operating parameters or operating parameter sets are retrievably stored in a data pool, and
**in that** the operating parameters or operating parameter sets are transmitted, on the basis of the classification, to an algorithm for the generation of optimized operating parameters or operating parameter sets for the adjustment of the agricultural working machine (1) and/or of the at least one working assembly (2).

## Revendications

1. Système de travail agricole destiné à l'optimisation de paramètres de fonctionnement, comprenant au moins une machine de travail agricole (1), en particulier au moins un tracteur, et comprenant au moins une unité de travail (2) accouplée à la machine de travail agricole (1) et destinée à l'exécution ou l'aide aux travaux agricoles, la machine de travail agricole (1) présentant un système d'assistance au conducteur (3) destiné à la collecte, au traitement et à l'édition de données relatives à une instruction de travail agricole,
**caractérisé en ce que**
le système d'assistance au conducteur (3) est configuré pour recueillir une pluralité de paramètres de fonctionnement et permettre une classification, côté utilisateur, des paramètres de fonctionnement recueillis ou de jeux de paramètres de fonctionnement comportant plusieurs paramètres de fonctionnement recueillis différents,
**en ce que** des paramètres de fonctionnement individuels ou tous les paramètres de fonctionnement ou jeux de paramètres de fonctionnement classifiés sont enregistrés dans un pool de données avec possibilité de les extraire, et
**en ce que** les paramètres de fonctionnement ou les jeux de paramètres de fonctionnement sont transmis, sur la base de la classification, à un algorithme de génération de paramètres de fonctionnement ou de jeux de paramètres de fonctionnement optimisés, en vue du réglage de la machine de travail agricole (1) et/ou de l'unité de travail (2), au nombre d'au moins une.

2. Système de travail agricole selon la revendication 1, **caractérisé en ce que** pour la collecte de données, en particulier de la pluralité de paramètres de fonctionnement ou de jeux de paramètres de fonctionnement, le système d'assistance au conducteur (3) est couplé à au moins un capteur (5) de la machine de travail agricole (1), à au moins un capteur (6) de l'unité de travail (2) respective, à au moins une source de données interne, à au moins une source de données externe et/ou à au moins un dispositif de saisi (7) destiné à la saisie de données côté utilisateur, notamment un clavier, un écran tactile (8) et/ou un microphone (9).

3. Système de travail agricole selon la revendication 1 ou 2, **caractérisé en ce que** pour l'édition de données à destination de l'utilisateur (4), notamment de paramètres de fonctionnement ou de jeux de paramètres de fonctionnement préalablement recueillis et devant être classifiés côté utilisateur, et/ou pour une requête concernant la classification de paramètres de fonctionnement ou de jeux de paramètres de fonctionnement préalablement recueillis, le système d'assistance au conducteur (3) est couplé à au moins un dispositif d'édition (10), notamment un dispositif d'affichage, un écran tactile (8) et/ou un haut-parleur (11).

4. Système de travail agricole selon l'une des revendications précédentes, **caractérisé en ce que** le système d'assistance au conducteur (3) est configuré en vue du recueil en langage naturel de données communiquées côté utilisateur et/ou de l'édition de données en langage naturel à destination de l'utilisateur (4).

5. Système de travail agricole selon l'une des revendications précédentes, **caractérisé en ce qu'**il est prévu un ordinateur (12) pour l'application de l'algorithme, et une mémoire de données (13) pour le stockage, dans le pool de données, des paramètres de fonctionnement ou des jeux de paramètres de fonctionnement classifiés, et notamment une mémoire de données (13) pour le stockage des paramètres de fonctionnement ou des jeux de paramètres de fonctionnement optimisés du fait de l'application de l'algorithme, en vue du réglage de la machine de travail agricole (1) et/ou de l'unité de travail (2), au nombre d'au moins une, de préférence que l'ordinateur (12) et/ou la mémoire de données (13) respective fait partie de la machine de travail agricole (1) et/ou fait partie d'un réseau d'ordinateurs (14) externe du système de travail agricole.

6. Système de travail agricole selon l'une des revendications précédentes, **caractérisé en ce que** plusieurs machines de travail agricoles (1) du système de travail agricole, notamment du même parc, présentent chacune un système d'assistance au conducteur (3) qui est destiné à la collecte, au traitement et à l'édition de données relatives à une instruction de travail agricole et qui est configuré pour recueillir une pluralité de paramètres de fonctionnement et permettre une classification, côté utilisateur, des paramètres de fonctionnement recueillis ou de jeux de paramètres de fonctionnement comportant plusieurs paramètres de fonctionnement recueillis différents, sachant que des paramètres de fonctionnement ou des jeux de paramètres de fonctionnement classifiés individuels ou tous les paramètres de fonctionnement ou jeux de paramètres de fonctionnement classifiés individuels sont enregistrés dans le pool de données, avec possibilité de les extraire, et sont transmis, sur la base de la classification, à un algorithme de génération de paramètres de fonctionnement ou de jeux de paramètres de fonctionnement optimisés, en vue du réglage d'une machine de travail agricole (1) et/ou d'au moins une unité de travail (2).

7. Système de travail agricole selon l'une des revendications précédentes, **caractérisé en ce que** les paramètres de fonctionnement ou les jeux de paramètres de fonctionnement optimisés par application de l'algorithme peuvent être consultés par d'autres machines de travail agricoles (1') et/ou unités de travail (2') du système de travail agricole, notamment aussi par d'autres combinaisons de machines de travail (1') et d'unités de travail (2') agricoles.

8. Système de travail agricole selon l'une des revendications précédentes, **caractérisé en ce que** sont recueillis en tant que paramètres de fonctionnement, un ou plusieurs paramètres de machine de la machine de travail agricole (1) et/ou de l'unité de travail (2) respective, des paramètres de travail et/ou des paramètres d'environnement.

9. Système de travail agricole selon la revendication 8, **caractérisé en ce que**
- le paramètre de machine respectif est choisi dans le groupe comprenant la vitesse d'avancement, la consommation de carburant, la puissance motrice délivrée, le couple moteur délivré, la vitesse de rotation de l'arbre d'entraînement, la charge exercée sur le moteur, le régime de changement de vitesse, des paramètres de la caractéristique de changement de vitesse, des paramètres du réglage du contrôle de patinage, des paramètres du réglage de la force de traction, des paramètres du réglage en pleine charge, la pression d'air et/ou le type de pneus de la paire de pneus avant et/ou arrière, le poids d'un dispositif de lestage avant et/ou arrière, des paramètres du mécanisme de relevage avant et/ou arrière, la position du bras supérieur, des paramètres des vérins de traction, des paramètres du réglage de vanne hydraulique, la position du disque creux, le point de traction, la pression de compression, la pression d'appui, des paramètres de l'espace de traitement et/ou des paramètres du système de direction ainsi que des modifications de réglage du paramètre respectif des paramètres de machine, et/ou,
- le paramètre de travail respectif est choisi dans le groupe comprenant une instruction de travail agricole, le genre et/ou le type de machine de travail agricole (1), le genre et/ou le type de l'unité de travail (2) respective, notamment de l'élément rapporté, le raccordement mécanique, hydraulique et/ou électrique de l'unité de travail (2) respective à la machine de travail agricole (1), les réglages de machine de l'ISOBUS, la puissance nécessaire à l'unité de travail (2) respective, la profondeur et/ou la largeur de travail de l'unité de travail (2) respective, la consommation par surface et/ou la puissance par unité de surface, et/ou
- le paramètre d'environnement respectif est choisi dans le groupe comprenant le profil de terrain du champ et/ou de la voie de passage actuelle, les dimensions du champ, les données météorologiques actuelles, les données de position GPS, le type de culture actuel, l'espèce cultivée actuelle, la nature actuelle de la récolte du champ et/ou de la voie de passage actuelle, la nature actuelle du sol du champ et/ou de la voie de passage actuelle et/ou l'historique du champ et/ou de la voie de passage actuelle, notamment le type ou un type de culture précédent, l'espèce ou une espèce cultivée précédente, la nature de la récolte et/ou la nature ou une nature précédente du sol.

10. Système de travail agricole selon l'une des revendications précédentes, **caractérisé en ce que** les paramètres de fonctionnement à classifier sont des combinaisons d'un ou plusieurs paramètres de machine, notamment d'un ou plusieurs paramètres de machine selon la revendication 9, et/ou d'un ou plusieurs paramètres de travail, notamment d'un ou plusieurs paramètres de travail selon la revendication 9, et/ou d'un ou plusieurs paramètres d'environnement, notamment d'un ou plusieurs paramètres d'environnement selon la revendication 9.

11. Système de travail agricole selon l'une des revendications précédentes, **caractérisé en ce que** l'algorithme génère les paramètres de fonctionnement ou les jeux de paramètres de fonctionnement optimisés pour des combinaisons précises de paramètres de fonctionnement, de préférence pour des combinaisons précises d'une machine de travail agricole (1), d'une unité de travail (2) et d'un ou plusieurs paramètres d'environnement, notamment d'un ou plusieurs paramètres d'environnement selon la revendication 9.

12. Système de travail agricole selon l'une des revendications précédentes, **caractérisé en ce que** le système d'assistance au conducteur (3) est configuré de manière à permettre, côté utilisateur, notamment par l'intermédiaire d'un menu de sélection, de choisir une routine d'optimisation dans laquelle au moins un paramètre de fonctionnement prédéterminé, de préférence un paramètre de machine, notamment un paramètre de machine selon la revendication 9, est modifié selon une consigne prédéfinie, et à permettre ensuite à l'utilisateur (4) de classifier le paramètre de fonctionnement modifié ou le jeu de paramètres de fonctionnement contenant ce paramètre et d'autres paramètres de fonctionnement, sur la base du paramètre de fonctionnement modifié, au nombre d'au moins un, de préférence **en ce que** la routine d'optimisation est choisie dans le groupe comprenant l'optimisation de la qualité du processus de traitement, l'optimisation de l'efficacité du processus de traitement et/ou l'optimisation de la puissance de traitement.

13. Système de travail agricole selon la revendication 12, **caractérisé en ce que** le système d'assistance au conducteur (3) est configuré pour soumettre à l'utilisateur (4), après une sélection d'une routine d'optimisation par l'utilisateur, une ou plusieurs propositions pour le paramètre de fonctionnement à modifier, au nombre d'au moins un, et permettre l'acceptation et/ou le refus de la proposition ou d'au moins une des propositions par l'utilisateur.

14. Système de travail agricole selon l'une des revendications précédentes, **caractérisé en ce que** le système d'assistance au conducteur (3) est configuré pour réaliser une évaluation de la pertinence des données saisies par l'utilisateur.

15. Procédé d'optimisation de paramètres de fonctionnement, en utilisant un système de travail agricole, en particulier un système de travail agricole selon l'une des revendications précédentes, comprenant au moins une machine de travail agricole (1), notamment au moins un tracteur, et comprenant au moins une unité de travail (2) accouplée à la machine de travail agricole (1) et destinée à l'exécution ou l'aide aux travaux agricoles, la machine de travail agricole (1) présentant un système d'assistance au conducteur (3) destiné à la collecte, au traitement et à l'édition de données relatives à une instruction de travail agricole,
**caractérisé en ce que**
le système d'assistance au conducteur (3) permet de recueillir une pluralité de paramètres de fonctionnement et d'effectuer une classification, côté utilisateur, des paramètres de fonctionnement recueillis ou de jeux de paramètres de fonctionnement comportant plusieurs paramètres de fonctionnement recueillis différents,
**en ce que** des paramètres de fonctionnement individuels ou tous les paramètres de fonctionnement ou jeux de paramètres de fonctionnement classifiés sont enregistrés dans un pool de données avec possibilité de les extraire, et
**en ce que** les paramètres de fonctionnement ou les jeux de paramètres de fonctionnement sont transmis, sur la base de la classification, à un algorithme de génération de paramètres de fonctionnement ou de jeux de paramètres de fonctionnement optimisés, en vue du réglage de la machine de travail agricole (1) et/ou de l'unité de travail (2), au nombre d'au moins une.
